# NEUE EUROPÄISCHE PATENTSCHRIFT

(11) **EP 1 075 895 B2**
(45) Veröffentlichungstag und Bekanntmachung des Hinweises auf die Entscheidung über den Einspruch: **29.03.2006**
(45) Hinweis auf die Patenterteilung: 11.06.2003
(21) Anmeldenummer: 00115509.2
(22) Anmeldetag: 19.07.2000
(51) Int. Cl.: B23Q 16/00, B23Q 3/18, B23Q 7/14

(54) **Werkstück mit Referenzelementen**
Workpiece with reference elements
Pièce avec éléments de référence

(30) Priorität: 12.08.1999 DE 19937635
(43) Veröffentlichungstag der Anmeldung: 14.02.2001
(73) Patentinhaber: System 3R International AB, 162 50 Vällingby (SE)
(72) Erfinder: Hjalmarsson, Ake, 167 66 Bromma (SE)
(74) Vertreter: Zinngrebe, Horst

(56) Entgegenhaltungen:
- EP-A- 0 111 092
- EP-A- 0 202 452
- EP-A- 0 255 042
- EP-A- 0 722 809
- DE-C- 3 729 601

## Beschreibung

Die Erfindung betrifft eine Vorrichtung zum Festlegen eines zu bearbeitenden Werkstückes auf einer Oberseite eines Werkstückträgers, beispielsweise einer Palette.

Zum maschinellen Bearbeiten eines beispielsweise metallischen Werkstückes muß dieses auf dem Tisch einer Bearbeitungsmaschine, etwa einer Drehbank, einer Fräsmaschine oder einer Elektroerosionsmaschine, festgespannt werden. Für die Bearbeitung unterschiedlich geformter Werkstücke mit im wesentlichen den gleichen Werkzeugen hat es sich bewährt, jedes Werkstück auf einer Palette dauerhaft festzulegen, die ihrerseits in stets eindeutiger räumlicher Position auf den Tisch aufgespannt werden kann (DE-B-3 729 601).

Für das innerhalb eines räumlichen Referenzsystems eindeutige und wiederholbare Aufspannen eines Werkstückträgers etwa in Form einer Palette gibt es mehrere verschiedene Kupplungsvorrichtungen, die in den Dokumenten EP-A-111 092, EP-A-255 042 und EP-A-722 809 beschrieben sind. Ein eine Schwalbenschwanzführung aufweisende Werkstückhaltevorrichtung für eine Drahterosionsmaschine zeigt die Schrift EP-A-202 452. Das Werkstück selbst wird auf dem Träger üblicherweise durch Verschrauben, Anlöten oder Ankleben befestigt. Diese Befestigungsarten erscheinen vor allem dann als notwendig, wenn das Werkstück ein noch unbearbeitetes Gußteil oder ein extrudiertes oder geschmiedetes Teil ist.

Der Erfindung liegt die Aufgabe zugrunde, die Befestigung eines Werkstückes auf einem Werkstückträger zu vereinfachen.

Dazu ist erfindungsgemäß vorgesehen, daß das vorzugsweise gegossene Werkstück wenigstens ein mit dem Werkstück einteiliges als abstehender Ansatz ausgebildetes Referenzelement aufweist, an welchem wenigstens eine Referenzfläche ausgebildet ist, wobei die Oberseite des Werkstückträgers ein Referenzgegenelement besitzt. Damit wird die Befestigung des Werkstückes an seinem Träger wesentlich vereinfacht. Bei gegossenen oder sonst unbearbeiteten Werkstücken braucht lediglich die Form für die Schaffung des Werkstückes mit Referenzelement entsprechend gestaltet zu werden, besondere der jeweiligen Werkstückgestalt angepaßte Befestigungsmittel können entfallen. Die Anpassung der Form kann zum Beispiel so ausgeführt sein, daß an das Werkstück ein Ansatz angeformt wird, an welchem das Referenzelement ausgebildet ist. Diese Ausgestaltung der Erfindung hat den Vorteil, daß das Werkstück zur Bearbeitung von praktisch allen Seiten für das Werkzeug zugänglich ist. Als Referenzelement kommt bevorzugt ein Schwalbenschwanzprofil in Betracht

Vorteilhafte Ausgestaltungen der Erfindung sind in den Unteransprüchen angegeben. Nachstehend werden Ausführungsbeispiele der Erfindung anhand der beigefügten Zeichnung im einzelnen beschrieben.
Es zeigen:
Figur 1: eine schematische Ansicht eines gegossenen Werkstückes mit Ansatz;
Figur 2: eine der Figur 1 ähnliche Darstellung mit anderen Referenzelementen;
Figur 3: eine der Figur 1 ähnliche Darstellung einer weiteren Ausführungsform;
Figuren 4 und 5: schematische Darstellungen von Befestigungsarten der erfindungsgemäßen Werkstücke;
Figur 6: eine schematische Stimansicht eines extrudierten Werkstückes mit Referenzelement; und
Figur 7: eine Seitenansicht des Werkstückes nach Figur 6, sowie
Figuren 8 und 9: weitere Ausführungsformen der Erfindung.

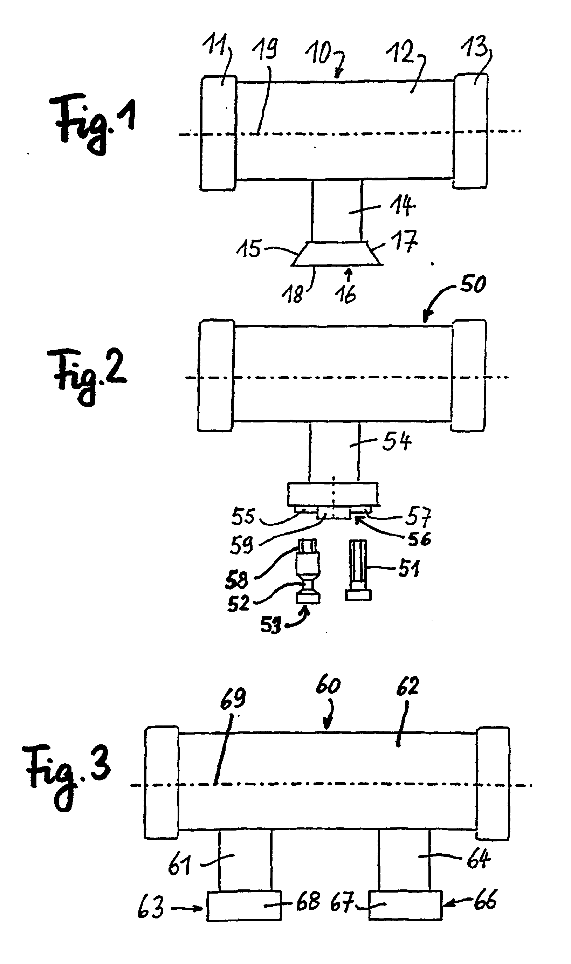

Das in Figur 1 dargestellte Werkstück 10 besteht aus einem Gußteil mit einem zylindrischen und an den beiden Stirnseiten 11, 13 radial verdickten Korpus 12, an dessen Mantel etwa mittig zwischen den Strinseiten 11, 13 ein radial quer abstehender Ansatz 14 angeformt ist Das freie Ende des Ansatzes 14 ist zu einem Schwalbenschwanzprofil 16 mit nach außen weisenden und senkrechtzur Ebene der Figur 1 sich erstreckenden Schrägflächen 15, 17 geformt.

Das Schwalbenschwanzprofil 16 mit den Schrägflächen 15, 17 stellt ein Referenzelement dar, dessen Referenzgegenelement 26 auf der Oberseite 21 eines Werkstückträgers 20 ausgebildet ist (Figur4). Das Referenzgegenelement 26 besteht aus einer in die Oberseite 21 geschnittenen Nut, deren gegenüberliegende Flanken 25, 27 in Anpassung an die Schrägflächen 15, 17 geneigt sind. Das Referenzgegenelement 26 kann gemäß Figur 4 zweiteilig insofern ausgeführt sein, als die Nutflanke 25 integraler Bestandteil des Werkstückträgers 20 ist, während die gegenüberliegende Nutflanke 27 an einem auf die Oberseite 21 aufgeschraubten Paßstück 23 vorgesehen ist.

Wird das Werkstück 10 in die Nut 26 in einer senkrecht zur Ebene der Figur 4 weisenden Richtung quer zur Achse 19 seines Korpus' bis zu einem nicht dargestellten Anschlag eingeschoben und in der Anlage am Anschlag beispielsweise durch Anziehen der das Paßstück 23 fixierenden Schraube 29 gehalten, ruht die im wesentlichen ebene Unterseite 18 des Schwalbenschwanzprofils 16 auf dem im wesentlichen ebenen Nutboden 28. Das Werkstück 10 ist dann fest mit dem Werkstückträger verbunden. Die bezüglich der Achse 19 radiale Länge des Ansatzes 14 kann so bemessen sein, daß alle Seiten des Korpus 12 sowie seiner Stimseiten 11, 13 für eine spanende oder spanlose Bearbeitung durch ein Werkzeug zugänglich sind.

Bei der in Figur 5 dargestellten Ausführungsform ist der Werkstückträger eine Palette 30, deren Oberseite 31 mit einem Referenzgegenelement 36 mit Paßstück 33 genauso ausgebildet ist, wie das vorstehend anhand von Figur 4 für das Referenzgegenelement 26 beschrieben wurde. Somit kann das Werkstück 10 mit Ansatz 14 und schwalbenschwanzförmigem Referenzelement 16 in der erläuterten Weise auf der Palette 30 befestigt werden.

An ihrer Unterseite ist die Palette 30 mit kreuzweise angelegten Paaren von jeweils gegenüberliegenden axialelastischen Lippen 35, 37 versehen. Aus der Oberseite des Maschinentisches 40 stehen kreuzweise angelegte Prismenzapfen 44 vor, von denen jeder dazu bestimmt ist, in den Zwischenraum zwischen zwei gegenüberliegende Lippen 37, 37 jeweils eines Lippenpaares einzudringen, wenn die Palette 30 auf den Tisch 40 bis zur Anlage ihrer im übrigen planen Unterseite auf aus dem Tisch 40 vorstehende Zapfen 42, 46 aufgesetzt wird. Es handelt sich hierbei um ein räumliches Referenzsystem, das aus dem Dokument EP-A- 255 042 bekannt ist.

Das gegossene zylindrische Werkstück 50 gemäß Figur 2 ist wieder mit einem mittigen, radial quer abstehenden Ansatz 54 versehen, der an seinem freien Ende eine Gruppe von Referenzelementen 56 trägt, die für sich aus der Schrift EP-A-722 809 bekannt sind. Zu ihnen gehören beispielsweise drei vorstehende Rippen 55, 57, die in Umfangsrichtung um eine mittige Erhebung 59 gleich verteilt sind. Es versteht sich, daß der für dieses Ausführungsbeispiel nicht dargestellte Werkstückträger mit entsprechenden Referenzgegenelementen auf seiner Oberseite ausgerüstet ist, wie das im einzelnen in der letzterwähnten Schrift erläutert ist.

Zum Anspannen des Werkstückes 50 an den Werkstückträger besitzt die Erhebung 59 ein mittiges axiales Innengewinde, in welches ein den Werkstückträger durchgreifender Gewindebolzen 51 zum Spannen bis zur Anlage von nicht dargestellten z-Referenzelementen eingedreht wird. Ein solcher Gewindebolzen 51 ist beispielsweise in der Figur 2 der Schrift EP-A-0111092 dargestellt und dort mit 5 bezeichnet. Alternativ kann statt des Gewindebolzens 51 ein Zuganker 53 Verwendung finden, dessen freies Ende ein in das Innengewinde der Erhebung 59 passendes Außengewinde 58 trägt und in das Innengewinde festeingeschraubt ist In dem Werkstückträger ist dann eine beispielsweise pneumatisch betätigbare Spannvorrichtung etwa nach Art der in Figur 6 der Schrift EP-A-0255042 dargestellten eingebaut, deren Kugelkranz den Zuganker 53 an einer ringförmigen Eindrehung 52 desselben ergreift.

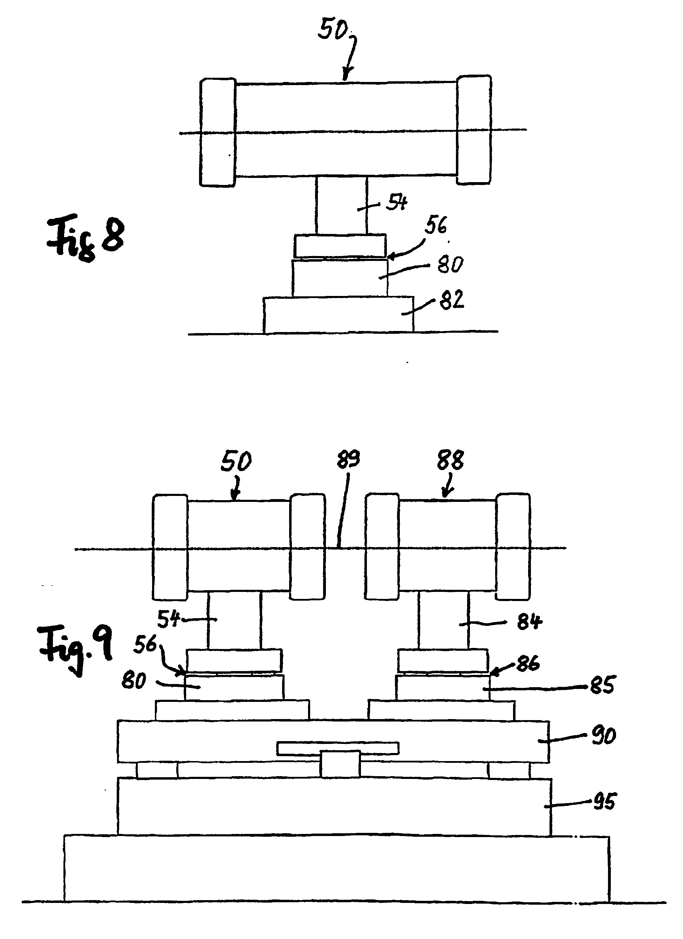

Gemäß Figur 8 ist der Werkstückträger 82 auf seiner Oberseite mit einem Futter 80 versehen, welches an seiner freien, der Erhebung 59 beim Spannen zugewandten Stirnseite die für die Referenzelemente 56 erforderlichen Referenzgegenelemente trägt, also beispielsweise ein Futter, das in der Schrift EP-A-0722809, Figur 1 gezeigt und dort mit 9 bezeichnet ist.

Figur 9 zeigt die Möglichkeit, daß auf einer Palette 90 mehrere, im dargestellten Ausführungsbeispiel zwei Futter 80, 85 nebeneinander aufrecht angeordnet sind. Das Futter 80 trägt das eingespannte Werkstück 50 und das zum Futter gleichartige Futter 85 trägt ein anderes Werkstück 88 so, daß die Werkstücke 50 und 88 eine gemeinsame Achse 89 haben. Das weitere Werkstück 88 ist wie das Werkstück 50 ein Gußteil mit Ansatz 84, an dessen freier Stimseite eine Gruppe von Referenzelementen 86 gemäß der letztgenannten Schrift trägt. Die Palette 90 ist an ihrer Unterseite und ein Werktisch 95 ist an seiner Oberseite mit Referenzelementen bezw. Referenzgegenelementen etwa gemäß EP-A-0255042 versehen, wobei ein die Palette 90 am Werktisch 95 anspannender Zuganker nicht dargestellt ist.

Selbstverständlich können auf der Palette 90 noch weitere Futter vorgesehen sein, so daß von den in die Futter eingespannten Werkstücken wenigstens einige, nämlich etwa die Werkstücke 50 und 88, eine gemeinsame Achse 89 haben.

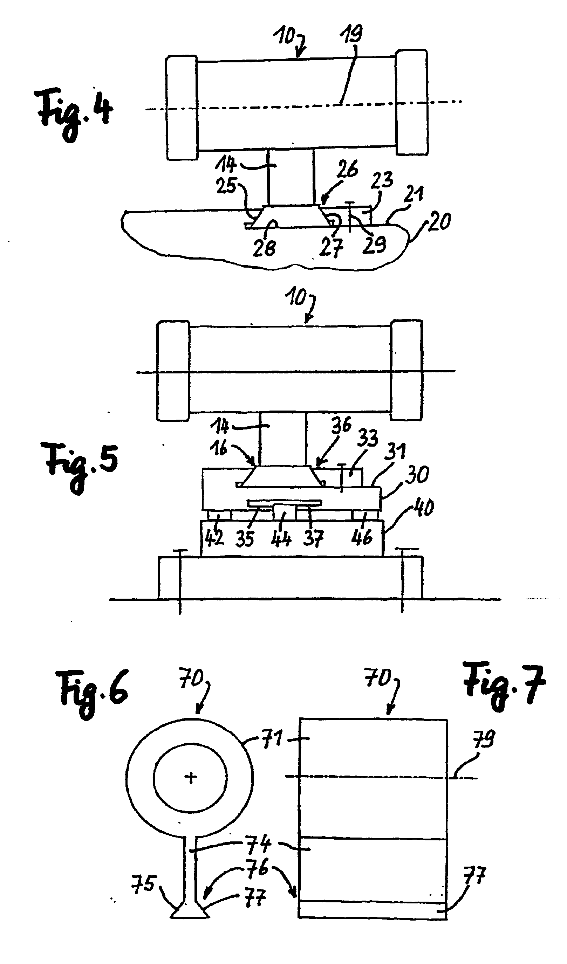

Es liegt im Rahmen der Erfindung, bei längeren Werkstücken 60 (Figur 3) zwei oder mehrere axial beabstandete Ansätze 61, 64 an den Werkstückkorpus 62 radial quer abstehend anzuformen, deren freie Enden mit je einem Referenzelement, hierin Form je eines Schwalbenschwanzprofils 63, 66, versehen sind. Jedes dieser Referenzelemente gleicht dem Referenzelement 16, erstreckt sich jedoch parallel zur Achse 69 des Werkstückkorpus' 62 so, daß gleich liegende Schrägflächen, wie etwa die der Schrägfläche 17 entsprechenden Schrägflächen 68 und 67fluchten. Bei dieser Ausgestaltung kann das Werkstück 60 in Richtung seiner Achse 69 in das nutenförmige Referenzgegenelement 26 eingeschoben werden.

An den Mantel 71 des extrudierten, rohrförmigen Werkstückes 70 mit Achse 79 gemäß Figuren 6 und 7 ist außen ein radial abstehender stegförmiger Ansatz 74 angeformt, der sich über die gesamte axiale Länge des Werkstückes 70 erstreckt.

An seinem freien Ende trägt der Ansatz 74 einen schwalbenschwanzförmig verbreiterten und entsprechend langen Fuß 76, dessen gegenüberliegende Schrägflächen 75, 77 den Schrägflächen 15 und 17 entsprechen. Fuß 76 mit Schrägflächen 75, 77 bilden hier das Referenzelement. Wie ersichtlich kann auch das extrudierte Werkstück 70 in das nutenförmige Referenzgegenelement 26 axial eingeschoben und wie beschrieben dort befestigt werden.

## Patentansprüche

1. Vorrichtung zum Festlegen eines zu bearbeitenden Werkstückes (10, 50, 60, 70) auf einer Oberseite (21, 31) eines Werkstückträgers (20, 30, 82, 90), beispielsweise einer Palette, **dadurch gekennzeichnet, dass** das vorzugsweise gegossene, geschmiedete oder extrudierte Werkstück wenigstens ein mit dem Werkstück einteiliges als abstehender Ansatz ausgebildetes Referenzelement (16, 63, 66, 56, 76) aufweist, an welchem wenigstens eine Referenzfläche (15, 17; 55, 57; 67, 68; 75, 77) ausgebildet ist, wobei die Oberseite des Werkstückträgers ein Referenzgegenelement (26, 36) besitzt, und wobei ferner das Referenzelement ein Schwalbenschwanzprofil mit gegenüberliegenden Schrägflächen (15, 17; 75, 76) hat, oder alternativ das Referenzelement mehrere in Umfangsrichtung gleich verteilte Rippen (55, 56) aufweist.

2. Vorrichtung nach Anspruch 1, **dadurch gekennzeichnet, dass** die Schrägflächen sich quer zur Achse (19) des Korpus (12) erstrecken.

3. Vorrichtung nach Anspruch 1 oder 2, **dadurch gekennzeichnet, dass** das Referenzelement am freien Ende eines an den Korpus (12, 62) des Werkstückes angeformten Ansatzes (14, 54, 61, 66, 74) ausgebildet ist.

4. Vorrichtung nach Anspruch 3, **dadurch gekennzeichnet, dass** sich der Ansatz radial quer zum Korpus erstreckt.

5. Vorrichtung nach Anspruch 4, **dadurch gekennzeichnet, dass** bei einem langgestreckten Korpus (62) gleichliegende Schrägflächen in axialer Richtung fluchten.

6. Vorrichtung nach einem der Ansprüche 4 oder 5, **dadurch gekennzeichnet, dass** das nutenförmige Referenzgegenelement (26, 36) ein Passstück (23, 33) aufweist, welches auf der Oberseite (21, 31) festlegbar und mit einer einer der Schrägflächen (17) angepassten Nutflanke (27) versehen ist.

7. Vorrichtung nach einem der vorstehenden Ansprüche, dass der Ansatz (74) und das an seinem freien Ende ausgebildete Referenzelement (76) die gleiche axiale Länge aufweisen wie das extrudierte Werkstück (70).

8. Vorrichtung nach einem der vorstehenden Ansprüche, **dadurch gekennzeichnet, dass** das Referenzelement und das Referenzgegenelement derart ausgebildet sind, dass das Werkstück an der Oberseite in eindeutiger räumlicher Lage befestigbar ist.

9. Vorrichtung nach einem der vorstehenden Ansprüche, **dadurch gekennzeichnet, dass** der Werkstücksträger (82) mit einem Futter (80) versehen ist, an dessen freier Stirnfläche die Referenzgegenelemente ausgebildet sind.

10. Vorrichtung nach einem der Ansprüche 1-10, **dadurch gekennzeichnet, dass** der Werkstückträger eine Palette (90) ist, auf deren Oberseite mehrere Futter (80, 85) nebeneinander aufrecht vorgesehen sind, welche an ihren freien Stirnflächen die Referenzgegenelemente aufweisen.

11. Vorrichtung nach Anspruch 10, **dadurch gekennzeichnet, dass** die Referenzgegenelemente derart angeordnet sind, dass von den in die Futter (80, 85) eingespannten Werkstücke (50, 88) wenigstens einige eine gemeinsame Achse (89) haben.

## Claims

1. Device for securing a workpiece (10, 50, 60, 70) to be machined on an upper side (21, 31) of a workpiece carrier (20, 30, 82, 90), for example a pallet, **characterised in that** the preferably cast, forged or extruded workpiece has at least one reference element (16, 63, 66, 56, 76) formed as a projection extending from and in one piece with the workpiece, on which reference element at least one reference surface (15, 17; 55, 57; 67, 68; 75, 77) is formed, whereby the upper side of the workpiece carrier possesses a reference counterelement (26, 36), and whereby furthermore the reference element has a dovetail profile with opposing inclined surfaces (15, 17; 75, 76), or alternatively the reference element has a plurality of ribs (55, 56) distributed equally in the circumferential direction.

2. Device according to claim 1, **characterised in that** the inclined surfaces extend transversely to the axis (19) of the body (12).

3. Device according to claim 1 or 2, **characterised in that** the reference element is formed on the free end of a projection (14, 54, 61, 66, 74) formed on the body (12, 62) of the workpiece.

4. Device according to claim 3, **characterised in that** the projection extends radially transversely to the body.

5. Device according to claim 4, **characterised in that** with an elongated body (62), similarly positioned inclined surfaces are aligned in the axial direction.

6. Device according to one of the claims 4 or 5, **characterised in that** the slot-shaped reference counterelement (26, 36) has a matching piece (23, 33) which may be secured on the upper side (21, 31) and is provided with a slot flank (27) matching one of the inclined surfaces (17).

7. Device according to one of the preceding claims, **characterised in that** the projection (74) and the reference element (76) formed on its free end have the same axial length as the extruded workpiece (70).

8. Device according to one of the preceding claims, **characterised in that** the reference element and the reference counterelement are designed such that the workpiece may be attached to the upper side in a consistent spatial position.

9. Device according to one of the preceding claims, **characterised in that** the workpiece carrier (82) is provided with a collet (80) on whose free end face the reference counterelements are formed.

10. Device according to one of the claims 1 to 10, **characterised in that** the workpiece carrier is a pallet (90) on whose upper side a plurality of collets (80, 85) are provided mutually adjacent and upright and having the reference counterelements on their free end face.

11. Device according to Claim 10, **characterised in that** the reference counterelements are arranged such that, of the workpieces (50, 88) clamped in the collets (80, 85), at least some have a common axis (89).

## Revendications

1. Dispositif destiné à bloquer une pièce à usiner (10, 50, 60, 70) sur une face supérieure (21, 31) d'un support (20, 30, 82, 90) de pièce, par exemple d'une palette, **caractérisé en ce que** la pièce, qui est de préférence coulée, forgée ou extrudée, comporte au moins un élément de référence (16, 63, 66, 56, 76) agencé en tant qu'appendice dépassant formé d'un seul tenant avec la pièce, sur lequel est prévue au moins une surface de référence (15, 17 ; 55, 57 ; 67, 68 ; 75, 77), la face supérieure du support de pièce comportant un élément de référence antagoniste (26, 36), et l'élément de référence comportant en outre un profil en queue d'aronde avec des surfaces obliques opposées (15, 17 ; 75, 76), ou l'élément de référence comportant en variante plusieurs nervures (55, 56) réparties uniformément dans la direction périphérique.

2. Dispositif selon la revendication 1, **caractérisé en ce que** les surfaces obliques s'étendent transversalement à l'axe (19) du corps (12).

3. Dispositif selon la revendication 1 ou 2, **caractérisé en ce que** l'élément de référence est agencé sur l'extrémité libre d'un appendice (14, 54, 61, 66, 74) formé sur le corps (12, 62) de la pièce.

4. Dispositif selon la revendication 3, **caractérisé en ce que** l'appendice s'étend radialement dans le sens transversal au corps.

5. Dispositif selon la revendication 4, **caractérisé en ce que**, dans le cas d'un corps (62) allongé, des surfaces obliques positionnées de façon identique sont alignées dans la direction axiale.

6. Dispositif selon l'une des revendications 4 ou 5, **caractérisé en ce que** l'élément de référence antagoniste (26, 36) en forme de rainure comporte une pièce d'ajustage (23, 33) qui peut être fixée sur la face supérieure (21, 31), et qui est munie d'un flanc (27) de rainure adapté à l'une des surfaces obliques (17)

7. Dispositif selon l'une quelconque des revendications précédentes, **caractérisé en ce** l'appendice (74) et l'élément de référence (76) formé sur son extrémité libre ont la même longueur axiale que la pièce extrudée (70).

8. Dispositif selon l'une quelconque des revendications précédentes, **caractérisé en ce que** l'élément de référence et l'élément de référence antagoniste sont agencés de telle sorte que la pièce puisse être fixée sur la face supérieure dans une position définie dans l'espace.

9. Dispositif selon l'une quelconque des revendications précédentes, **caractérisé en ce que** le support (82) de pièce est muni d'un mandrin (80), sur la face frontale libre duquel sont agencés les éléments de référence antagonistes.

10. Dispositif selon l'une quelconque des revendications 1 à 10, **caractérisé en ce que** le support de pièce est une palette (90), sur la face supérieure de laquelle plusieurs mandrins (80, 85) sont prévus côte à côte à la verticale, lesquels comportent les éléments de référence antagonistes sur leurs faces frontales libres.

11. Dispositif selon la revendication 10, **caractérisé en ce que** les éléments de référence antagonistes sont disposés de telle sorte que, parmi les pièces (50, 88) enserrées dans les mandrins (80, 85), au moins quelques-unes ont un axe commun (89).
